# EUROPÄISCHE PATENTSCHRIFT

(11) **EP 2 722 603 B1**
(45) Veröffentlichungstag und Bekanntmachung des Hinweises auf die Patenterteilung: **29.05.2019**
(21) Anmeldenummer: 13181471.7
(22) Anmeldetag: 23.08.2013
(51) Int. Cl.: F24F 11/00, F24F 3/16

(54) **Reinraumsystem**
Clean room system
Système de salle blanche

(30) Priorität: 16.10.2012 DE 102012020202
(43) Veröffentlichungstag der Anmeldung: 23.04.2014
(73) Patentinhaber: Schilling Engineering GmbH, 79793 Wutöschingen (DE)
(72) Erfinder: Schilling, Günther, 79771 Klettgau (DE); Schmitt, Dietmar, 79736 Rickenbach (DE); Spitznagel, Dietmar, 79771 Klettgau-Rechberg (DE)
(74) Vertreter: Daub, Thomas

(56) Entgegenhaltungen:
- EP-A2- 0 884 541
- WO-A2-2012/112775
- DE-B3-102008 057 787
- DE-C2- 3 540 263
- JP-A- H05 322 248

## Beschreibung

### Stand der Technik

Die Erfindung betrifft ein Reinraumsystem nach dem Oberbegriff des unabhängigen Patentanspruchs 1.

Reinraumsysteme und Reinraumlaborsysteme sind in verschiedenen Varianten erhältlich und werden den Kundenwünschen entsprechend angepasst und individuell gestaltet. Die dazugehörigen Komponenten können individuell zusammengestellt werden. Reinraumtechnik und Reinraumlabore finden vor allem in den Bereichen der Pharmaindustrie, der Medizintechnik, der Biotechnik, der Solarindustrie, der Halbleiterindustrie, Automobilindustrie, und der Mikrotechnik Anwendung. In der Reinraumtechnik und den Reinraumlaboren ist kontrollierte Sauberkeit oberstes Gebot. Durch gesetzliche Auflagen wird die Reinheit von Räumen durch ISO14644-1 und GMP EU Richtlinien festgeschrieben, wobei die ISO-Norm die maximal zulässige Anzahl an Partikeln beschreibt. Die GMP EU Richtlinie reguliert die zulässige Keimanzahl. Reinraumsysteme können individuell zusammengestellt werden. Um angemessene Reinheit zu gewährleisten, müssen die Reinraumbedingungen permanent überwacht und gesteuert werden.

Die Druckschrift DE3540263C2 offenbart eine geschlossene Reinraumkabine mit einem Umkleidebereich und mit einer lufttechnischen Anlage mit Schwebstofffilter und einem Zuluftkanal, welcher mit einem Klimagerät verbunden ist.

Die Druckschrift WO2012112775A2 offenbart ein Reinraumsystem, welches dazu vorgesehen ist, Energieersparungen zu realisieren, wenn der Reinraum nicht benutzt wird.

### Vorteile der Erfindung

Der Erfindung liegt insbesondere die Aufgabe zugrunde, ein Reinraumsystem bereitzustellen, mit welchem eine Verbesserung und Vereinfachung der Steuerung eines Reinraums ermöglicht wird.

Die Aufgabe wird erfindungsgemäß durch die Merkmale des Patentanspruchs 1 gelöst, wobei weitere Ausgestaltungen der Erfindung den Ansprüchen 2 bis 8 entnommen werden können.

Die Erfindung geht aus von einem Reinraumsystem mit zumindest einer Klimaeinheit, zumindest einer Druckbeaufschlagungseinheit, zumindest einer Sensoreinheit, die dazu vorgesehen ist, zumindest Reinraumparameter zu messen, und einer Steuereinheit, die zumindest Messwerte von der zumindest einen Sensoreinheit erhält. Es wird vorgeschlagen, dass zumindest die Klimaeinheit und die Druckbeaufschlagungseinheit gemeinsam von der Steuereinheit gesteuert und/oder geregelt werden, wobei die Steuereinheit vorzugsweise zur Regelung und/oder Steuerung der Klimaeinheit und der Druckbeaufschlagungseinheit Messwerte der Sensoreinheit nutzt. Unter "vorgesehen" soll insbesondere speziell programmiert, ausgelegt und/oder ausgestattet verstanden werden. Unter einer "Druckbeaufschlagungseinheit" soll insbesondere eine Einheit verstanden werden, die dazu vorgesehen ist, einen Luftdruck im Inneren eines Reinraums, insbesondere durch Einleitung eines Luftstroms, im Vergleich zu einem den Reinraum umgebenden Luftdruck, anzuheben. Unter einer "Klimaeinheit" soll insbesondere eine Einheit verstanden werden die dazu vorgesehen ist, zumindest eine Klimaeigenschaft, wie insbesondere eine Lufttemperatur und/oder eine Luftfeuchtigkeit zu beeinflussen, wobei vorzugsweise eine Stärke und eine Richtung der Beeinflussung durch eine Steuereinheit regulierbar ist.

Ein wesentlicher Vorteil der Erfindung besteht darin, dass zumindest die Klimaeinheit und die Druckbeaufschlagungseinheit gemeinsam von der Steuereinheit gesteuert und/oder geregelt werden. In diesem Zusammenhang soll unter "gemeinsam" insbesondere von einem einzelnen Prozessor gesteuert verstanden werden. Insbesondere unterscheidet sich die erfindungsgemäße Steuereinheit von einer herkömmlichen Steuereinheit, die lediglich zu einer Kommunikation mit separaten Steuereinheiten der Klimaeinheit und der Druckbeaufschlagungseinheit vorgesehen ist. In vorteilhafter Weise können durch das erfindungsgemäße Reinraumsystem die Reinraumbedingungen von einem oder mehreren Reinräumen gleichzeitig zentral von einer Steuereinheit permanent überwacht und gesteuert werden. Durch eine Zusammenschaltung und Automatisierung der zumindest einen Klimaeinheit und der zumindest einen Druckbeaufschlagungseinheit in einem Reinraumsystem durch die erfindungsgemäße Steuereinheit kann der technische Geräteaufwand, die Betriebskosten, die Anschaffungskosten für die Geräte und der Grundflächenbedarf bzw. der Volumenbedarf erheblich reduziert werden, wodurch ein besonders günstiger und/oder wirtschaftlicher Betrieb von Reinräumen erreicht werden kann. Insbesondere kann eine Bauteilersparnis erreicht werden. Insbesondere kann auf mehrere, jeweils der Klimaeinheit und der Druckbeaufschlagungseinheit zugeordnete Sensoreinheiten verzichtet werden, indem insbesondere eine einzelne Sensoreinheit zur Regelung beider Einheiten genutzt wird. Durch eine energieeffiziente Steuerung und Regelung des einen Reinraums oder mehrerer Reinräume gleichzeitig durch eine einzelne Steuereinheit, können somit die Betriebskosten und Herstellungskosten durch das erfindungsgemäße Reinraumsystem drastisch reduziert werden.

In einer vorteilhaften Ausgestaltung der Erfindung ist die Steuereinheit zu einer Protokollierung zumindest eines Teils der Messwerte der Sensoreinheit vorgesehen. In vorteilhafter Weise können dadurch Messwerte langfristig dokumentiert und eingesehen werden bzw. bei einer Störung im Reinraum oder bei Produktionsproblemen kann im Nachhinein die Ursache eines Produktionsfehlers ermittelt werden. Insbesondere kann eine Bauteilersparnis erreicht werden, da zur Protokollierung Daten einer bereits zur Steuerung und/oder Regelung der Klimaeinheit und der Druckbeaufschlagungseinheit vorhandenen Sensoreinheit genutzt werden.

Erfindungsgemäß ist zumindest eine Bedienerschnittstelleneinheit vorgesehen, die in zumindest einem Betriebszustand mit der Steuereinheit verbunden ist. In vorteilhafter Weise
kann die Steuereinheit durch Eingabe von Parametern über eine zentral und/oder dezentral angeordnete
Bedienerschnittstelleneinheit und/oder über ein anderes externes Datenverarbeitungssystem bedient werden und das Reinraumsystem steuern. Die erfindungsgemäße Steuereinheit kann in vorteilhafter Weise Messwerte erfassen bzw. das Reinraumsystem steuern und zeitgleich vom Bedienpersonal bedient werden. Insbesondere ist die Steuereinheit dazu vorgesehen, zumindest in einem Betriebszustand aktuelle und/oder aufgezeichnete Messwerte der Sensoreinheit über die Bedienerschnittstelleneinheit anzuzeigen.

Erfindungsgemäß ist die Steuereinheit dazu vorgesehen, in Abhängigkeit von Eingaben über die Bedienerschnittstelleneinheit Sollwerte zur Steuerung zumindest der Druckbeaufschlagungseinheit und der Klimatechnikeinheit anzupassen, wobei die Steuereinheit zusätzlich zu der Bedienerschnittstelleneinheit mit Bedienerschnittstelleneinheiten, die als externe Datenverarbeitungssysteme, wie beispielsweise einem Tablet-PC oder Smartphone, ausgebildet sind, gekoppelt ist. In vorteilhafter Weise können die von den Parametern abhängigen Soll-Signale in einer Auswertematrix in der Steuereinheit hinterlegt werden, wodurch die Druckbeaufschlagungseinheit und/oder die Klimatechnikeinheit nur innerhalb der vorgegebenen Parameter in Betrieb sein können und dadurch Betriebszustandfehler ausgeschlossen werden können. Ferner kann eine Reinraumklassifizierung nach IS014644-1 und GMP EU in einer Auswertematrix hinterlegt werden und somit ein IS014644-1 und GMP EU konformes Monitoring eingestellt werden.

In einer weiteren Ausgestaltung wird vorgeschlagen, dass die Steuereinheit bei einer Abweichung von den Sollwerten eine Störmeldung und/oder einen Wartungshinweis ausgibt. In vorteilhafter Weise kann dadurch eine Fehlfunktion einer Einheit sofort erkannt und Gegenmaßnahmen eingeleitet werden, wodurch eine Schadensminimierung erfolgen kann. Ferner gewährleistet der Wartungshinweis, dass eine vorgesehene Wartung eines Gerätes oder des Reinraumsystems nach Vorgaben des Herstellers eingehalten wird und dadurch langfristig ein intakter Betriebszustand des Reinraumsystems gewährleistet werden kann.

In einer weiteren Ausgestaltung wird vorgeschlagen, dass die Steuereinheit in zumindest einem Betriebszustand dazu vorgesehen ist, Sollwerte und/oder Istwerte, vorzugsweise gleichzeitig, über die Bedienerschnittstelleneinheit auszugeben. In vorteilhafter Weise ist die Steuereinheit mit der Bedienerschnittstelleneinheit verbunden, wodurch das Bedienpersonal an der Bedienerschnittstelleneinheit einen Vergleich der in der Steuereinheit erfassten Sollwerte mit den Istwerten oder eine Korrektur der in der Steuereinheit erfassten Sollwerte durchführen kann.

Erfindungsgemäß wird zumindest eine weitere Reinraumsystemkomponente vorgeschlagen, die ebenfalls durch die Steuereinheit gesteuert und/oder geregelt wird. Besonders vorteilhaft ist, dass an die bestehende Steuereinheit weitere Reinraumsystemkomponenten kurzfristig ohne zusätzlichen Aufwand problemlos angeschlossen oder von der Steuereinheit getrennt werden können, da an der Steuereinheit freie Schnittstelleneinrichtungen für weitere Reinraumsystemkomponenten, insbesondere für Steuersignale und/oder Sensorsignale, vorgesehen sind. Dadurch kann die Produktion in einem Reinraum flexibel auf neue Produktionsbedingungen oder neue Produkte eingestellt werden, wodurch kostenintensive Anpassungsmaßnahmen durch zeitintensive Montagearbeiten und hohe Geräteinvestitionen entfallen können.

Erfindungsgemäß ist die zumindest eine Reinraumsystemkomponente als Fördereinrichtung, Fertigungseinrichtung und/oder Verpackungseinrichtung ausgeführt. In diesem Zusammenhang soll unter "Schleuseneinrichtung" insbesondere eine personenbezogene bzw. individualisierte Zutrittskontrolle für das Bedienpersonal des Reinraums und/oder eine Materialdurchreiche verstanden werden, die insbesondere mit einer Fördereinrichtung, insbesondere einem Transportband, gekoppelt ist. Als Medien für die Zutrittskontrolle können sowohl aktive oder passive, insbesondere biometrische Identmittel dienen, die als berührungslose oder als kontaktbehaftete Identmittel eingesetzt werden können. Dadurch können für einzelne Bereiche in einem Reinraum Zugangsberechtigungen bzw. Zugangssperren eingerichtet werden. In diesem Zusammenhang soll unter
"Arbeitsplatzeinheit" insbesondere eine Laminar Flow Box verstanden werden, wobei insbesondere Strömungseigenschaften der Laminar Flow Box eingestellt werden können.

Ferner wird vorgeschlagen, dass die Sensoreinheit eine Sensoreinrichtung zur Erfassung von zumindest einem Reinraumparameter aufweist, der mindestens Druck, Temperatur, Feuchte, Partikeldichte, Keimdichte und/oder Luftdurchfluss in dem Reinraum erfasst. In vorteilhafter Weise können die Sensoreinrichtungen der Sensoreinheit alle reinraumsystemrelevanten Signale im Reinraum permanent berührungslos messen und erfassen und zur Verarbeitung an die mit der Sensoreinheit in Verbindung stehende Steuereinheit weiterleiten. Diese Methode ermöglicht auf eine besonders einfache und schonende Art eine Erfassung von allen oben genannten Reinraumparametern in allen Bereichen eines Reinraums oder zeitgleich in mehreren Reinräumen, wobei die Erfassung der Reinraumparameter in nächster Nähe eines zu erfassenden bzw. zu messenden Objekts oder in einem definierte Abstand dazu erfolgen kann.

In vorteilhafter Ausgestaltung der Erfindung weist die Sensoreinheit eine Sensoreinrichtung zur Erfassung von zumindest einem Umgebungsparameter auf, der mindestens die Lichtintensität in dem Reinraum erfasst. Hierdurch können im Reinraum optimale Bedingungen eingestellt werden, insbesondere die Arbeitsbedingungen an den Arbeitsplätzen, die mit Bedienpersonal besetzt werden müssen.

In einer weiteren vorteilhaften Ausgestaltung der Erfindung weist die Sensoreinheit eine Sensoreinrichtung zur Erfassung von zumindest einem Bewegungsparameter auf, der mindestens die Bewegung von in einem Reinraum und/oder in einem Reinraumzutrittsbereich und/oder in einem Reinraumaustrittsbereich des Reinraumsystems befindlichen Personen und/oder Gegenständen erfasst. Die Sensoreinrichtung der Sensoreinheit kann insbesondere die Funktion eines Bewegungssensors erfüllen und alle Bewegungen in einem Reinraum registrieren. In vorteilhafter Weise können alle registrierten Bewegungen als Bewegungsparameter bzw. als Istwerte an die mit der Sensoreinheit verbundene Steuereinheit übertragen werden.

In vorteilhafter Weise weist die Steuereinheit ein Betriebsprogramm auf, das hinsichtlich einer Anzahl und/oder einer Ausstattung vorhandener Reinräume zumindest im Wesentlichen frei konfigurierbar ist. In besonders vorteilhafter Weise kann das Betriebsprogramm besonders wirtschaftlich für alle Reinraum-Varianten und alle Herstellungsprozesse bzw. Produkte eingesetzt werden, wodurch die Softwarekosten und/oder die Lizenzgebühren für das Betriebsprogramm gesenkt werden können. Insbesondere stellt die Steuereinheit eine Bedienoberfläche zur Verfügung, die sich an eine Konfigurierung anpassen kann. Die Steuereinheit generiert ein grafisches Schema zur übersichtlichen Darstellung der Reinraumparameter und insbesondere auch der Parameter der weiteren Reinraumkomponenten. Vorteilhaft ist eine Veränderung der Konfiguration lediglich über ein Wartungsmodul, beispielsweise einen PC, insbesondere mit spezieller Schnittstelle, möglich, wodurch eine versehentliche Manipulation der Konfiguration im Betrieb vermieden werden kann. Alternativ ist es denkbar, dass die Konfiguration über die Bedienoberfläche selbst änderbar ist, wobei vorteilhaft zumindest eine Zugriffskontrolle, insbesondere über Passwort, vorgesehen ist.

### Zeichnungen

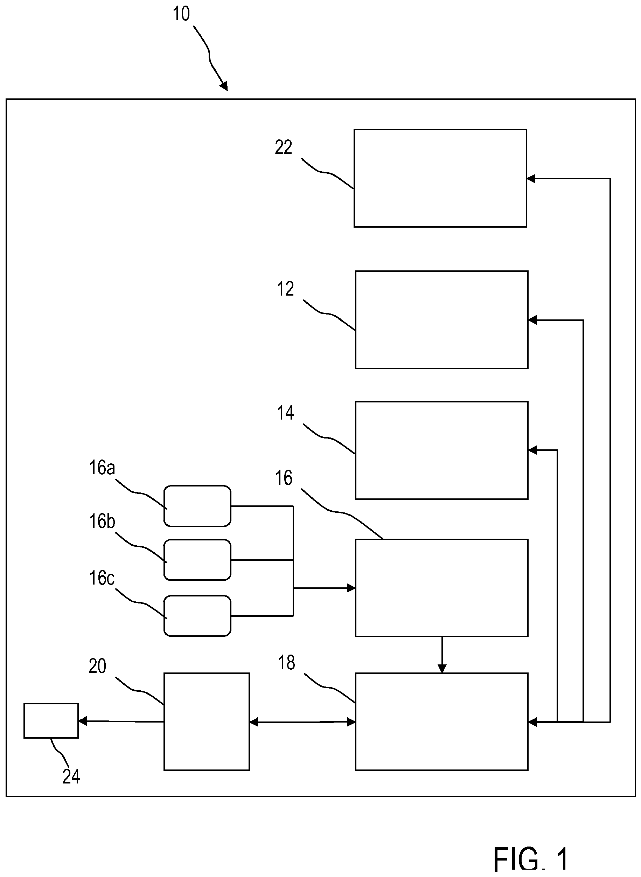

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt in einem schematischen Blockdiagramm ein erfindungsgemäßes Reinraumsystem.Das Reinraumsystem 10 weist eine Klimaeinheit 12, eine Druckbeaufschlagungseinheit 14 und eine Sensoreinheit 16, die dazu vorgesehen
ist, Reinraumparameter zu messen, und eine Steuereinheit 18, die Messwerte von der einzelnen Sensoreinheit 16 erhält, auf. In einer alternativen hier nicht dargestellten Ausführung kann zur Steuerung und Regelung von mehreren Reinräumen das erfindungsgemäße Reinraumsystem 10 mehrere Klimaeinheiten12, mehrere Druckbeaufschlagungseinheiten 14 und mehrere Sensoreinheiten 16 aufweisen, die in zumindest einem Betriebszustand gemeinsam von der Steuereinheit 16 gesteuert und/oder geregelt werden, wodurch insbesondere eine Bauteilersparnis und/oder eine hohe Wirtschaftlichkeit erreicht werden kann, da üblicherweise Einheiten mehrerer Reinräume getrennt gesteuert werden und daher hohe betriebswirtschaftliche Kosten entstehen, was sich insbesondere auf die Produktionskosten niederschlagen kann.

Um ein Reinraumsystem 10 bereitzustellen, mit welchem eine Verbesserung und Vereinfachung der Steuerung eines Reinraums ermöglicht wird, wird erfindungsgemäß vorgeschlagen, dass zumindest die Klimaeinheit 12 und die Druckbeaufschlagungseinheit 14 gemeinsam von der Steuereinheit 18 gesteuert und/oder geregelt werden.

Im vorliegenden Ausführungsbeispiel gemäß der einen Figur weist das Reinraumsystem 10, zur Eingabe von Sollwerten eine Bedienerschnittstelleneinheit 20 auf, die in einem Betriebszustand mit der Steuereinheit 18 verbunden ist. Im störungsfreien Normalbetrieb weist die Bedienerschnittstelleneinheit 20 eine grüne Matrixanzeige auf. Alternativ kann das Reinraumsystem 10 mehr als eine Bedienerschnittstelleneinheit 20 aufweisen, die bedienerfreundlich innerhalb und/oder außerhalb des einen Reinraums oder der mehreren Reinräume angeordnet sein können. Die Bedienerschnittstelleneinheit 20 ist als Touchscreenbildschirm ausgebildet. Dieser weist eine Bildschirmdiagonale von 15" auf, wobei auch andere Bildschirmgrößen, vorzugsweise in einem Bereich zwischen 9" und 17", denkbar sind. Zusätzlich zur Bedienerschnittstelleneinheit 20 kann die Steuereinheit 18 mit hier nicht dargestellten Bedienerschnittstelleneinheiten, die als externe Datenverarbeitungssysteme, wie beispielsweise einem Tablet-PC oder Smartphone, ausgebildet sind, kabelgebunden oder kabellos, gekoppelt sein und, beispielsweise mittels RTP (Real-Time Transport Protocol) oder mittels eines anderen Datenübertragungssystems, Daten bzw. Messwerte übertragen bzw. über diese eingestellt werden.

Die Steuereinheit 18 ist zur Protokollierung zumindest eines Teils der Messwerte der Sensoreinheit 16 vorgesehen. Ferner werden in der Steuereinheit 18, in Abhängigkeit von Eingaben über die Bedienerschnittstelleneinheit 20, Sollwerte zur Steuerung zumindest der Druckbeaufschlagungseinheit 14 und/oder der Klimaeinheit 12 angepasst. Hierzu werden die von den Parametern abhängigen Sollwerte in einer Auswertematrix in der Steuereinheit 18 hinterlegt. Während des Betriebs des Reinraums führt die Steuereinheit 18 permanent einen Vergleich des Istwerts mit dem Sollwert der Klimaeinheit 12 und/oder mit dem Sollwert der Druckbeaufschlagungseinheit 14 durch. Weicht irgendein Istwert von einem in der Auswertematrix in der Steuereinheit 18 hinterlegten Sollwert ab, gibt die Steuereinheit 18 eine Störmeldung und/oder einen Wartungshinweis aus. Die Störmeldung oder der Wartungshinweis wird über eine Warneinheit 24 ausgegeben, die einstückig mit der Bedienerschnittstelleneinheit 20 ausgebildet sein kann, oder alternativ als eine oder mehrere selbständige Warneinheiten 24 in dem einen Reinraum oder in den mehreren Reinräumen angeordnet sein kann bzw. können. Die Warneinheit 24 des Reinraumsystems 10 kann als eine akustische und/oder als eine optische und/oder als eine printtechnische Warneinheit 24 ausgeführt werden und als Warnhinweis beispielsweise ein blinkendes Lichtsignal einer Lampe, ein Tonsignal eines Lautsprechers, ein Papierdokument eines Druckers, eine gespeicherte Datei auf einer Festplatte oder einem anderen Speichermedium ausgeben. Zusätzlich zum Warnhinweis der Warneinheit 24 schaltet im Störungsfall die Bedienerschnittstelleneinheit 20 von der grünen Matrixanzeige auf eine rote Matrixanzeige um. Weiterhin blinkt die Matrixanzeige.

Die Steuereinheit 18 zeigt im Betriebszustand über die Bedienerschnittstelleneinheit 20 Sollwerte und/oder Istwerte vorzugsweise gleichzeitig an und dokumentiert alle Sollwerte und/oder Istwerte des Reinraumsystems 10. Die Dokumentation der Sollwerte und/oder Istwerte des Reinraumsystems 10 kann in der Steuereinheit 18 erfolgen oder die dokumentierten Daten können an einen hier nicht dargestellten externen Datenspeicher übertragen werden.

Es ist ebenfalls möglich zumindest eine weitere Reinraumsystemkomponente 22 mit der Steuereinheit 18 zu verbinden bzw. an diesen anzuschließen, die ebenfalls durch die Steuereinheit 18 gesteuert und/oder geregelt wird. Die weitere Reinraumsystemkomponente 22 kann als eine Reinraumbegrenzungseinrichtung, eine Beleuchtungseinrichtung, eine Schleuseneinrichtung, eine Fördereinrichtung, eine Arbeitsplatzeinheit, eine Desinfektionseinheit, eine Fertigungseinrichtung und/oder eine Verpackungseinrichtung ausgeführt sein. Für die Schleusenfunktion ist im Bereich der Schleuseneinrichtung ein Not-Tür-Auf-Knopf und zumindest ein Not-Knopf innerhalb und außerhalb des Reinraums angeordnet. Die Schleuseneinrichtung ist insbesondere als Zutrittskontrolle für das Bedienpersonal des Reinraums eingerichtet.

Die Sensoreinheit 16 dient im Reinraum ausschließlich zur Erfassung von Ist-Signalen. Hierzu weist die Sensoreinheit 16 Sensoreinrichtungen 16.a zur Erfassung der Reinraumparameter Druck, Temperatur, Feuchte, Partikeldichte, Keimdichte und Luftdurchfluss, in dem Reinraum auf. Um das Licht im Reinraum ein- bzw. auszuschalten oder zu dimmen bzw. zu regeln, weist die Sensoreinheit 16 eine Sensoreinrichtung 16b zur Erfassung von zumindest einem Umgebungsparameter auf, der mindestens die Lichtintensität in dem Reinraum erfasst. Ferner weist die Sensoreinheit 16 eine Sensoreinrichtung 16c zur Erfassung von zumindest einem Bewegungsparameter auf, der mindestens die Bewegung von in dem Reinraum und/oder in einem Reinraumzutrittsbereich und/oder in einem Reinraumaustrittsbereich des Reinraumsystems 10 befindlichen Personen und/oder Gegenständen erfasst. Die Sensoreinrichtung 16c der Sensoreinheit 16
kann als Personenidentifizierungseinrichtung mit einer Zuweisung der Zugangsberechtigung ausgeführt werden.

Vorzugsweise weist die Steuereinheit 18 ein Betriebsprogramm auf, das hinsichtlich einer Anzahl und/oder einer Ausstattung vorhandener Reinräume zumindest im Wesentlichen frei konfigurierbar ist. Insbesondere stellt die Steuereinheit 18 eine Bedienoberfläche auf, die sich an eine Konfigurierung anpasst und generiert ein grafisches Schema zur übersichtlichen Darstellung der vorhandenen Reinraumkomponenten 12, 14, 16, 22 und deren Parameter.

### Bezugszeichen

- 10: Reinraumsystem
- 12: Klimaeinheit
- 14: Druckbeaufschlagungseinheit
- 16: Sensoreinheit
- 16a: Sensoreinrichtung
- 16b: Sensoreinrichtung
- 16c: Sensoreinrichtung
- 18: Steuereinheit
- 20: Bedienerschnittstelleneinheit
- 22: Reinraumsystemkomponente
- 24: Warneinheit

## Patentansprüche

1. Reinraumsystem (10) mit zumindest einer Klimaeinheit (12), zumindest einer Druckbeaufschlagungseinheit (14), zumindest einer Sensoreinheit (16), die dazu vorgesehen ist, zumindest Reinraumparameter zu messen, und einer Steuereinheit (18), die zumindest Messwerte von der zumindest einen Sensoreinheit (16) erhält, wobei zumindest die Klimaeinheit (12) und die Druckbeaufschlagungseinheit (14) gemeinsam von der Steuereinheit (18) gesteuert und/oder geregelt werden, **gekennzeichnet durch** zumindest eine Bedienerschnittstelleneinheit (20), die in zumindest einem Betriebszustand mit der Steuereinheit (18) verbunden ist, wobei die Steuereinheit (18) dazu vorgesehen ist, in Abhängigkeit von Eingaben über die Bedienerschnittstelleneinheit (20) Sollwerte zur Steuerung der Druckbeaufschlagungseinheit (14) und der Klimaeinheit (12) anzupassen und wobei die Steuereinheit (18) zusätzlich zu der Bedienerschnittstelleneinheit (20) mit Bedienerschnittstelleneinheiten, die als externe Datenverarbeitungssysteme, wie beispielsweise einem Tablet-PC oder Smartphone, ausgebildet sind, gekoppelt ist, und mit zumindest einer weiteren Reinraumsystemkomponente (22), die ebenfalls durch die Steuereinheit (18) gesteuert und/oder geregelt wird, wobei die zumindest eine Reinraumsystemkomponente (22) als Fördereinrichtung, Fertigungseinrichtung und/oder Verpackungseinrichtung ausgeführt ist.

2. Reinraumsystem nach Anspruch 1, **dadurch gekennzeichnet, dass** die Steuereinheit (18) zu einer Protokollierung zumindest eines Teils der Messwerte der Sensoreinheit (16) vorgesehen ist.

3. Reinraumsystem nach Anspruch 1 oder 2, **dadurch gekennzeichnet, dass** die Steuereinheit (18) bei einer Abweichung von den Sollwerten eine Störmeldung und/oder einen Wartungshinweis ausgibt.

4. Reinraumsystem nach einem der vorhergehenden Ansprüche, **dadurch gekennzeichnet, dass** die Steuereinheit (18) in zumindest einem Betriebszustand dazu vorgesehen ist, Soll- und/oder Istwerte, vorzugsweise gleichzeitig, über die Bedienerschnittstelleneinheit (20) auszugeben.

5. Reinraumsystem nach einem der vorhergehenden Ansprüche, **dadurch gekennzeichnet, dass** die Sensoreinheit (16) eine Sensoreinrichtung (16.a) zur Erfassung von zumindest einem Reinraumparameter aufweist, der mindestens Druck, Temperatur, Feuchte, Partikeldichte, Keimdichte und/oder Luftdurchfluss in dem Reinraum erfasst.

6. Reinraumsystem nach einem der vorhergehenden Ansprüche, **dadurch gekennzeichnet, dass** die Sensoreinheit (16) eine Sensoreinrichtung (16b) zur Erfassung von zumindest einem Umgebungsparameter aufweist, der mindestens die Lichtintensität in dem Reinraum erfasst.

7. Reinraumsystem nach einem der vorhergehenden Ansprüche, **dadurch gekennzeichnet, dass** die Sensoreinheit (16) eine Sensoreinrichtung (16c) zur Erfassung von zumindest einem Bewegungsparameter aufweist, der mindestens die Bewegung von in einem Reinraum und/oder in einem Reinraumzutrittsbereich und/oder in einem Reinraumaustrittsbereich des Reinraumsystems (10) befindlichen Personen und/oder Gegenständen erfasst.

8. Reinraumsystem nach einem der vorhergehenden Ansprüche, **dadurch gekennzeichnet, dass** die Steuereinheit (18) ein Betriebsprogramm aufweist, das hinsichtlich einer Anzahl und/oder einer Ausstattung vorhandener Reinräume zumindest im Wesentlichen frei konfigurierbar ist.

## Claims

1. Cleanroom system (10) with at least one climate unit (12), with at least one pressurising unit (14), with at least one sensor unit (16) that is configured for measuring at least cleanroom parameters and with a control unit (18) that receives measurement values from the at least one sensor unit (16),
wherein at least the climate unit (12) and the pressurising unit (14) are together controlled and/or regulated by the control unit (18),
**characterised by** at least one operator interface unit (20), which is connected to the control unit (18) in at least one operation state,
wherein the control unit (18) is configured to adapt, depending on input, set values for controlling the pressurising unit (14) and the climate unit (12) via the operator interface unit (20)
and wherein the control unit (18) is coupled, in addition to the user interface unit (20), to user interface units which are implemented as external data processing systems, e.g. a tablet computer or a smartphone,
and with at least one further cleanroom system component (22) that is also controlled and/or regulated by the control unit (18), the at least one cleanroom system component (22) being realised as a conveying device, as a production device and/or as a packaging device.

2. Cleanroom system according to claim 1, **characterised in that** the control unit (18) is configured for a recordal of at least a portion of the measurement values of the sensor unit (16).

3. Cleanroom system according to claim 1 or 2, **characterised in that** the control unit (18) outputs an error notification and/or a maintenance suggestion in case of a deviation from the set values.

4. Cleanroom system according to one of the preceding claims, **characterised in that** the control unit (18) is in at least one operation state configured for outputting set values and/or actual values, preferably simultaneously, via the operator interface unit (20).

5. Cleanroom system according to one of the preceding claims, **characterised in that** the sensor unit (16) comprises a sensor device (16a) for a detection of at least one cleanroom parameter that captures at least pressure, temperature, humidity, particle density, germ density and/or air flow-through in the cleanroom.

6. Cleanroom system according to one of the preceding claims, **characterised in that** the sensor unit (16) comprises a sensor device (16b) for a detection of at least one environment parameter that captures at least the light intensity in the cleanroom.

7. Cleanroom system according to one of the preceding claims, **characterised in that** the sensor unit (16) comprises a sensor device (16c) for a detection of at least one movement parameter that captures at least the movement of persons and/or objects present in a cleanroom and/or in a cleanroom access zone and/or in a cleanroom outlet zone of the cleanroom system (10).

8. Cleanroom system according to one of the preceding claims, **characterised in that** the control unit (18) comprises an operation programme that is at least substantially freely configurable regarding a number and/or an equipment of existing cleanrooms.

## Revendications

1. Système de salle propre (10) avec au moins une unité climatiseur (12), avec au moins une unité de pressurisation (14), avec au moins une unité capteur (16) configurée pour mesurer au moins des paramètres de salle propre et avec une unité de commande (18) recevant des valeurs mesurées de l'au moins une unité capteur (16),
où au moins l'unité climatiseur (12) et l'unité de pressurisation (14) sont commandées et/ou régulées ensemble par l'unité de commande (18),
**caractérisé par** au moins une unité d'interface d'opérateur (20), qui est raccordée à l'unité de commande (18) en au moins un état opératif,
où l'unité de commande (18) est configurée pour adapter, dépendamment des entrées, des valeurs prescrites pour une commande de l'unité de pressurisation (14) et l'unité climatiseur (12) via l'unité d'interface d'opérateur (20),
et où l'unité de commande (18) est couplée, en plus de l'unité d'interface d'opérateur (20), avec des unités d'interface d'opérateur réalisées comme des systèmes externes de traitement des données, par exemple un tablet PC ou un smartphone,
et avec un autre composant de système de salle propre (22), qui est aussi commandé et/ou régulé par l'unité de commande (18),
l'au moins un composant de système de salle propre (22) étant implémenté comme dispositif convoyant, comme dispositif de production et/ou comme dispositif d'emballage.

2. Système de salle propre selon la revendication 1,
**caractérisé en ce que** l'unité de commande (18) est configurée pour consigner au moins une part des valeurs mesurées de l'unité capteur (16).

3. Système de salle propre selon l'une quelconque des revendications 1 ou 2, **caractérisé en ce qu'**en cas d'une déviation des valeurs prescrites, l'unité de commande (18) délivre un signalement de défaut et/ou une indication de maintenance.

4. Système de salle propre selon l'une quelconque des revendications précédentes, **caractérisé en ce que** l'unité de commande (18) est configurée, en au moins un état opératif, pour délivrer des valeurs prescrites et/ou des valeurs réelles via l'unité d'interface d'opérateur (20), préférablement simultanément.

5. Système de salle propre selon l'une quelconque des revendications précédentes, **caractérisé en ce que** l'unité capteur (16) comporte un dispositif capteur (16a) pour une détection d'au moins un paramètre de salle propre capturant au moins un/e pression, température, humidité, densité de particules, densité de germes et/ou passage d'air dans la salle propre.

6. Système de salle propre selon l'une quelconque des revendications précédentes, **caractérisé en ce que** l'unité capteur (16) comporte un dispositif capteur (16b) pour une détection d'au moins un paramètre d'environnement capturant au moins l'intensité lumineuse dans la salle propre.

7. Système de salle propre selon l'une quelconque des revendications précédentes, **caractérisé en ce que** l'unité capteur (16) comporte un dispositif capteur (16c) pour une détection d'au moins un paramètre de mouvement capturant au moins le mouvement de personnes et/ou d'objets présents dans une salle propre et/ou dans une zone d'accès de salle propre et/ou dans une zone de sortie du système de salle propre (10).

8. Système de salle propre selon l'une quelconque des revendications précédentes, **caractérisé en ce que** l'unité de commande (18) comporte un programme opérationnel, qui est au moins sensiblement librement configurable en ce qui concerne un nombre et/ou un équipement des salles propres existants.
